# EUROPEAN PATENT SPECIFICATION

(11) **EP 4 564 183 B1**
(45) Date of publication and mention of the grant of the patent: **12.08.2026**
(21) Application number: 23213333.0
(22) Date of filing: 30.11.2023
(51) Int. Cl.: G06F 13/12, G06F 13/364, G06F 13/40, G06F 13/42, H04L 12/40, H04L 12/403, H04L 61/5038, G06F 13/38

(54) **I2C BUS SYSTEM AND METHOD FOR SELECTIVELY CONNECTING IN AN I2C BUS SYSTEM A PLURALITY OF SLAVES TO A MASTER**
I2C-BUSSYSTEM UND VERFAHREN ZUM WAHLWEISEN VERBINDEN MEHRERER SLAVES MIT EINEM MASTER IN EINEM I2C-BUSSYSTEM
SYSTÈME DE BUS I2C ET PROCÉDÉ DE CONNEXION SÉLECTIVE DANS UN SYSTÈME DE BUS I2C D'UNE PLURALITÉ D'ESCLAVES À UN MAÎTRE

(43) Date of publication of application: 04.06.2025
(73) Proprietor: Hitachi Energy Ltd, 8050 Zürich (CH)
(72) Inventor: OSTAFINSKI, Lukasz, 30-389 Kraków (PL)
(74) Representative: Epping - Hermann - Fischer

(56) References cited:
- EP-A1- 2 778 941
- EP-A1- 3 092 573
- WO-A1-2009/142632

## Description

The present disclosure relates to an I2C bus system. Such a system comprises several I2C slave devices which are to be connected to an I2C bus. The I2C devices may be EEPROM memory devices, for example. The I2C bus system may be a part of a rack-mounted I/O system comprising a backplane and a plurality of boards with various functions. The identification, configuration and calibration data for these boards can be stored in the EEPROM memory.

Due to the I2C specification, the number of I2C slave devices to be connected to a common I2C bus is limited. In particular, it is not possible to connect more than one I2C slave device with the same I2C address to the common I2C bus. Commonly, eight different I2C slave addresses can be used with one type of EEPROM memory. In addition to that, the I2C specification defines the total capacity per I2C bus, which also limits the number of I2C slave devices on the same I2C bus.

US 6255973 B1 discloses an address selection circuitry, wherein addresses on an SM (System Management) bus are compared with a seven bit address stored in an address register. JP S59183551 A discloses an address bus system with an address selection circuit. US 5673048 A discloses an analog voltage address decoder circuit and stackable voltage comparator circuit.

Each of WO2016/061472 A1 and EP2778941 A1 discloses an I2C bus system wherein the master is connected to a plurality of slaves by a common shared I2C bus comprising a data and a clock bus. EP3092573 B1 discloses a readdressing circuit for a I2C bus.

A few possible solutions have been found to enable addressing multiple slave devices. As an example, an addressable I2C bus switch can be provided on the I2C bus. However, in this case, the I2C master must be always connected at the same position on the I2C bus (the switch has dedicated pins for I2C master bus) and there may be the only one I2C slave with the same address per the I2C slave output. Moreover, this solution requires more complicated PCB design, due to many I2C connections. Another solution, comprising an I2C bus multiplexer, is similar to the solution with an I2C bus switch and presents the same disadvantages.

Furthermore, an I2C address translator can be used, enabling the address of one or more I2C slave devices to be translated to a different address. However, also here, the position of the I2C master is fixed and this solution also requires a more complex PCB design. It is also possible to implement the required functionality in the design of digital logic devices such as an FPGA (Field-Programmable Gate Array) or a CPLD (Complex Programmable Logic device) or to use microcontrollers with at least two I2C controllers. However, both solutions are complex and expensive.

Embodiments of the disclosure relate to an improved I2C bus system.

According to a first aspect, an I2C bus system comprises a master and a plurality of slaves, wherein each of the slaves comprises a slave device, and comprises a common I2C bus comprising a data bus and a clock bus and comprising an addressing signal line for connecting the master and the plurality of slaves. The addressing signal line is configured to transmit an analog addressing signal from the master to the slaves. To each of the slaves, a range of the analog addressing signal or of a processed analog addressing signal is attributed, wherein the range is defined by a high threshold level and a low threshold level. The I2C bus system is configured to selectively connect each of the slave devices to the data bus and clock bus only if the addressing signal is in the range.

This allows connecting a plurality of slaves with the same I2C address to the I2C bus. At the same time, the master can be positioned in any slot on the backplane. It is also possible that all or some slaves have different I2C addresses. The master sets the level of the addressing signal sent over the addressing signal line to address a specific slave.

The analog addressing signal may be transmitted to the slaves and processed in a signal conditioning circuit. The signal conditioning circuit may comprise a filter, in particular a low pass filter, a voltage divider and/or a protection circuit. The analog addressing signal may be a voltage signal or a current signal, for example. When the analog addressing signal is a current signal, the signal conditioning circuit may further comprise a current-to-voltage converter for converting the signal into a voltage signal. The specified range of the analog addressing signal may correspond to the same or a different specified range of the processed analog addressing signal.

Each of the slaves comprises a slave device, which is connectable to and disconnectable from the I2C bus. The slave device may be a memory device, A/D converter, D/A converter, digital temperature sensor, I/O expander, digital power monitor and any other IC with I2C interface, for example.

The I2C bus system may comprise at least one switch in the connection of the slave device with the common I2C bus. In particular, each of the slaves may comprise a first switch in the connection of the slave device with the data bus and a second switch in the connection of the slave device with the clock bus.

The switch may be enabled when the analog addressing signal is in the range attributed to the slave and disabled when the analog addressing signal is not within the range attributed to the slave. In the case of a mechanical switch, "enabled" means that the switch is closed and "disabled" means that the switch is open. Accordingly, the slave device is only connected to the I2C bus when the switch is enabled. A connection of the slave device to the I2C bus corresponds to the connection of the slave to the I2C bus.

Each of the slaves may comprise a comparator for determining if the addressing signal is in the specified range. In particular, the comparator may compare the addressing signal with the high threshold level and low threshold level attributed to the slave.

The attributed range may be coded on the slaves or externally. When the coding is provided externally, the coding may be provided on the backplane. In this case, a coding may be provided for each of the slots and for the backplane itself.

For each of the slaves, the coding may be accomplished by one or more coding resistors. The coding resistors may be located on the slave or on the backplane. A voltage divider may set the high threshold level and the low threshold level based on the coding. A voltage divider may be located on each of the slaves. A voltage source or current source may be connected to the voltage divider.

The coding may be directly accomplished by resistors of the voltage divider. In this case, the coding may be provided by different resistance values, numbers and/or electric connections of the resistors of the voltage divider on the slaves, for example.

It is also possible that the coding is set by one or more coding resistors which are not part of the voltage divider. As an example, a voltage source may be connected to the voltage divider via the coding resistor. It is also possible that a programmable current source is provided wherein the coding resistor determines the current level. The coding resistor may have a different resistance value for the different slaves. The coding resistor may be located on the backplane or on the slave. When providing a separate coding resistor, the resistors of the voltage divider may have an identical layout for the different slaves.

The coding of the slaves may be provided by a coding circuit for each slave. For at least one of the slaves, the coding circuit may comprise one or more coding resistors. The coding may be accomplished by a pattern of the coding resistors connected or not connected to a specific voltage level from one side. When the coding resistor is not connected to the specific voltage level it may be connected to ground (0V) or may be floating, for example. The coding circuit may be connected to the slave from the other side. It is also possible that one of the slaves is coded by not providing any coding resistors for this slave.

For each slave, the coding resistors may be provided in the coding circuit and the coding may be accomplished by the connection or disconnection of the coding resistors to and from the specific voltage level. The coding resistors may have either the same or different resistance values. It is also possible that for each slave the coding circuit only comprises the coding resistors which are connected to the specific voltage level.

According to a further aspect, a method for selectively connecting in an I2C bus system a plurality of slaves to a master comprises the steps of providing an I2C bus system comprising a master, a plurality of slaves, a common I2C bus comprising a data bus and a clock bus and comprising an addressing line, wherein each of the slaves comprises a slave device, attributing to each of the slaves a specified range of an analog addressing signal, the range being defined by a high threshold level and a low threshold level, sending a data bus signal on the data bus and a clock bus signal on the clock bus accompanied by an addressing signal on the addressing line and selectively connecting each of the slave devices to the data bus and/or clock bus only if the addressing signal is in the attributed range.

The I2C bus system in accordance with the method may have any structural and functional features of the I2C bus system in the foregoing.

The present disclosure comprises several aspects and embodiments. Every feature described with respect to one of the aspects and embodiments is also disclosed herein with respect to the other aspects and embodiments, even if the respective feature is not explicitly mentioned in this context.

Further features, refinements and expediencies become apparent from the following description of the exemplary embodiments in connection with the figures. In the figures, elements of the same structure and/or functionality may be referenced by the same reference signs. It is to be understood that the embodiments shown in the figures are illustrative representations and are not necessarily drawn to scale.
Figure 1 shows an embodiment of an I2C bus system in a schematic circuit diagram,
Figure 2 shows an embodiment of a slave in a schematic circuit diagram,
Figure 3 shows communication waveforms over time in an I2C system for one slave,
Figure 4 shows communication waveforms over time in an I2C system for several slaves,
Figure 5 shows communication waveforms over time in an I2C system for one slave with an addressing signal in the form of a voltage,
Figure 6 shows communication waveforms over time in an I2C system for one slave with an addressing signal in the form of a current,
Figure 7 shows an embodiment of a master in a schematic circuit diagram,
Figure 8 shows an embodiment of a control algorithm of a master in a schematic circuit diagram,
Figures 9 to 11 show embodiments of setting high and low threshold values on a slave,
Figures 12 to 14 show further embodiments of setting high and low threshold values on a slave,
Figure 15 shows an embodiment of setting high and low threshold values for a slave externally,
Figure 16 shows a further embodiment of setting high and low threshold values for a slave externally,
Figures 17A to 17C show an embodiment of coding circuits for different slots and the backplane,
Figures 18A to 18C show a further embodiment of coding circuits for different slots and the backplane,
Figure 19 shows a further embodiment of setting high and low threshold values for a slave externally,
Figures 20, 21 and 22 show embodiments of a programmable current source,
Figures 23 shows a further embodiment of a programmable current source,
Figure 24 shows a further embodiment of an I2C bus system.

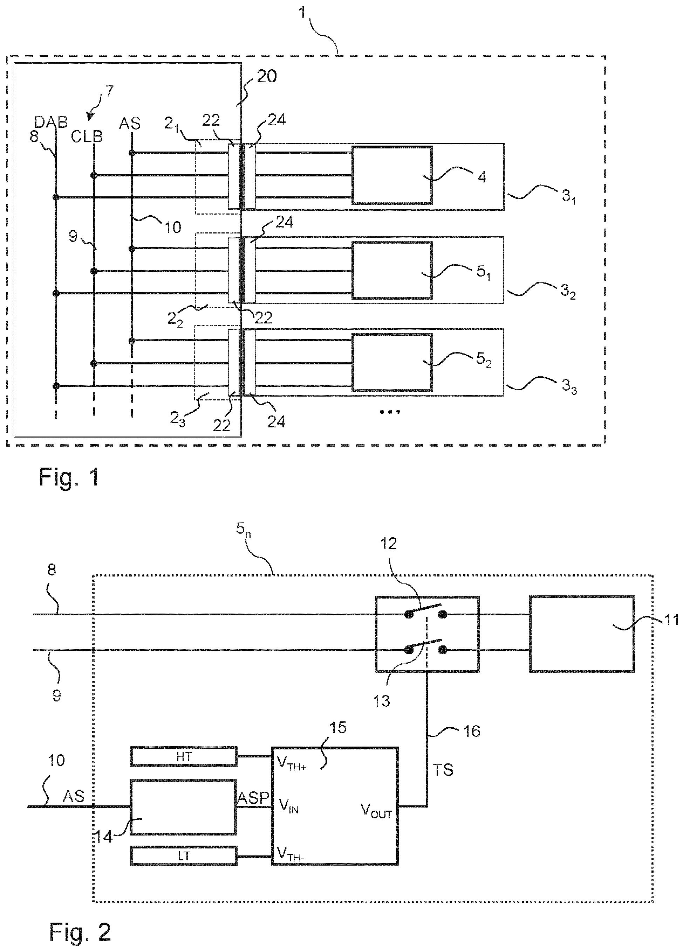

Figure 1 shows an embodiment of an I2C bus system 1. The I2C bus system 1 is a part of an I/O (Input/Output) system, in particular a rack-mounted I/O system. In an I2C bus system 1, the I2C (Inter-integrated Circuit) communication protocol is used. An I2C bus system 1 may be used in industrial automation and control systems, for example. The I2C bus system 1 comprises a plurality of slots 2₁, 2₂, 2₃ (..) for receiving boards 3₁, 3₂, 3₃ (..) with various functions.

The plurality of slots 2₁, 2₂, 2₃ (..) may comprise a backplane connector 22. The backplane connector 22 is used for connection between I2C bus 7, located on the backplane, and a plurality of slaves 5₁, 5₂, (..), located on the boards 3₁, 3₂, 3₃ (..), for example.

The plurality of boards 3₁, 3₂, 3₃ (..) may comprise a board connector 24. The board connector 24 has the same functionality as the backplane connector 22. The board connector 24 and the backplane connector 22 are matched together.

The plurality of boards 3₁, 3₂, 3₃ (..) may comprise one master 4 and a plurality of slaves 5₁, 5₂, (..). As an example, the master 4 and the slaves 5₁, 5₂, (..) may comprise memory devices, in particular EEPROM memory devices. The memory devices are used for storing identification, configuration and calibration data for the boards 3₁, 3₂, 3₃ (..). In the following, a slave is generally denoted as 5ₙ with n = 1 to N, N being the total number of the slaves. The same referencing is made for a slot 2ₙ and a board 3ₙ. Accordingly, in each of the slots 2ₙ, a board 3ₙ comprising a master 4 or a slave 5ₙ containing the configuration memory per slot 2ₙ can be inserted.

The master 4 and slaves 5ₙ are connected to a common I2C bus 7 comprising a data bus 8 and a clock bus 9. The data bus 8 is the signal line for transmitting data in a bidirectional manner (SDA). A data bus signal DAB is transmitted on the data bus 8. The clock bus 9 is the signal line for clock synchronization (SCL). A clock bus signal CLB is transmitted on the clock bus 9.

Typically, racks with 10 or 21 slots 2ₙ are provided. If a configuration memory per slot 2ₙ is used and one configuration memory is used on the backplane, then up to 11 or 22 memories are to be connected to the single I2C bus 7.

However, a typical I2C memory can be configured with only up to eight different slave addresses. It is usually not possible to connect two memories with the same address and more than eight memories to the one I2C bus. Furthermore, the I2C bus specification limits the total capacity per I2C bus.

The I2C bus system 1 comprises in addition to the I2C bus 7 an addressing signal line 10 which makes it possible to connect memories with the same I2C address to the common I2C bus 7. Accordingly, each of the master 4 and slaves 5₁, 5₂, (..) is not only connected to the I2C bus 7 but also to the addressing signal line 10. The addressing signal line 10 provides an analog addressing signal AS so that also memories having the same I2C addresses can be connected to the common I2C bus 7.

To each slave 5ₙ a specified range of the analog addressing signal AS is attributed. The specified ranges for the different slaves 5ₙ are non-overlapping. Accordingly, the analog addressing signal AS is unique for each slave 5ₙ.

The slaves 5ₙ may have the same I2C address. It is also possible that the slaves 5ₙ have different I2C addresses. In both cases, a specified range of the addressing signal AS can be attributed to each of the slaves 5ₙ.

The I2C bus system 1 is flexible, as the master 4 can be connected to any place on the I2C bus 7, i.e., can be inserted in any of the slots 2₁, 2₂, 2₃ (..).

Generally, in the figures, pull-up resistors for the data bus 8 and clock bus 9 are not shown but may be provided.

Figure 2 shows a slave 5ₙ comprising a slave device 11. The slave device 11 may be a memory device. The slave 5ₙ may be one of the slaves 5ₙ shown in Figure 1.

The slave device 11 is connected to the data bus 8 via a first switch 12 and to the clock bus 9 via a second switch 13. The switches 12, 13 are enabled or disabled via a trigger signal TS which depends on the range of the analog addressing Signal AS. When the range is within the range attributed to the specific slave 5ₙ, the switches 12, 13 are enabled and the slave device 11 is connected to the data bus 8 and the clock bus 9. The first switch 12 and second switch 13 may be integrated in the same switch component, for example different ports of a switch, or may be separate switch components.

The switches 12, 13 may include relays, transistors (e.g. BJT, MOSFET, BIGT), solid state switches or solid state relays, digital logic ICs (e.g. buffers, gates, multiplexers, etc.), reed switches and any combination thereof.

The addressing signal AS is provided to a signal conditioning circuit 14, which may comprise a voltage divider, a low pass filter and/or a protection circuit. The addressing signal AS may be in the form of a voltage or current signal. The processed addressing signal ASP is provided to a comparator 15 which compares the processed addressing signal ASP to a high threshold level HT and a low threshold level LT and determines if the processed addressing signal ASP is within the attributed range [LT,HT].

The comparator 15 may be a window comparator circuit. In particular, the processed addressing signal ASP may be an input voltage V_{IN} to the comparator 15 and the threshold levels HT, LT may be threshold voltages V_{TH+} and V_{TH-}. The trigger signal TS may be in the form of an output voltage V_{OUT}. The threshold levels HT, LT can be set by one or more coding resistors which may be on the slave 5ₙ or on the backplane 20. Each of the coding resistors may be a single resistor or a combination of resistors connected in series or a combination of resistors connected in parallel or a combination of the resistors connected in combination of the series and parallel resistors, for example. Generally, the trigger signal TS may be an analog or digital signal.

In the default state, the addressing signal AS and processed addressing signal ASP is equal to zero and the I2C bus system 1 will be in an idle state. Accordingly, the switches 12, 13 are disabled for all of the slave devices 11 and the I2C bus 7 is not loaded with any of the slave devices 11. If the processed addressing signal ASP is within the range attributed to a specific slave 5ₙ, a trigger signal TS is sent to the switches 12, 13 via a trigger signal line 16 and the switches 12, 13 will be enabled. Thus, the data bus 8 and clock bus 9 are connected to the slave device 11.

When the analog addressing signal AS is a current signal, the signal conditioning circuit 14 comprises a current-to-voltage converter for converting the input signal to a voltage. Also in this case, the signal conditioning circuit 14 may further comprise a low pass filter, a voltage divider and/or a protection circuit. In the default state, the current is equal to zero and the system is in an idle state. When the current level is within a range determined by a low and high current threshold, which corresponds to low and high voltage thresholds of the comparator 15, the comparator 15 sends the trigger signal TS to enable the switches 12, 13.

The trigger signal TS can be either analog or digital (HIGH or LOW logic state). When the switches 12, 13 are enabled, a transfer of the data bus signals DAB and clock bus signals CLB to the slave 5ₙ is enabled.

When the level of the addressing signal AS is out of the range defined by the low threshold level LT and high threshold level HT, the slave 5ₙ and, in particular, the slave device 11 is disconnected from the I2C bus 7.

With the connection and disconnection of the slaves 5ₙ from the I2C bus 7, the I2C bus specification, which limits the total capacity per I2C bus, can be complied with, also when a high number of slaves 5ₙ are present.

Furthermore, the I2C bus system 1 does not limit the position of the master 4. Accordingly, it is possible to position the master 4 in each slot 2₁, 2₂, 2₃ (..). This increases the flexibility of the I2C bus system 1.

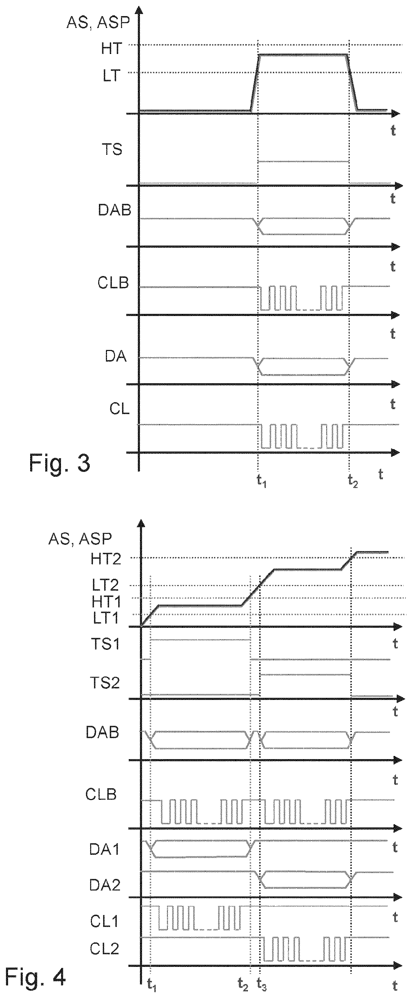

Figure 3 shows communication waveforms over time t in an I2C system 1 for one slave 5ₙ on an I2C bus 7.

At the beginning, the I2C bus system 1 is in an idle state. Neither a data bus signal DAB nor a clock bus signal CLB is provided. The addressing signal AS is a voltage signal. When the addressing signal level AS is not higher than a voltage level of +V then a signal conditioning circuit 14 may not include a voltage divider. Then a level of the processed addressing signal ASP is close to the addressing signal AS. This case is shown in Figure 3. Both signals are zero or at any value below the low threshold value LT. Accordingly, the trigger signal TS is not provided and the switches 12, 13 are not enabled. Accordingly, also the data signal DA and the clock signal CL on the slave 5ₙ are not provided.

At a first time t1, a data package in the form of a data bus signal DAB and clock bus signal CLB intended for the slave 5ₙ is sent via the data bus line 8. The addressing signal AS and/or the processed addressing signal ASP is within the range [LT, HT] attributed to the slave 5ₙ. Thus, the trigger signal TS is provided to the switches 12, 13 and a data signal DA and clock signal CL is transmitted to the slave 5ₙ.

At a later second time t2, the I2C system 1 return in its idle state, triggered by the addressing signal AS or the processed addressing signal ASP leaving the range [LT, HT] attributed to the slave 5ₙ. The switches 12, 13 are disabled and the slave 5ₙ is disconnected from the data bus 8 and clock bus 9.

Accordingly, the I2C signals DAB, CLB are transferred to the slave 5ₙ only if the addressing signal AS or the processed addressing signal ASP is within the defined range [LT, HT].

Figure 4 shows communication waveforms over time t in an I2C system 1 for a first slave 5₁ and a second slave 5₂ on an I2C bus 7. Similar to Figure 3, the waveforms show a case when a voltage divider is not included in a signal conditioning circuit 14.

To the first slave 5₁, an addressing signal AS in the range of [LT1, HT1] is attributed. For the second slave 5₂, an addressing signal AS in the range of [LT2, HT2] is attributed. The signal ranges are non-overlapping ranges.

At a first time t1, a data package in the form of a data bus signal DAB and clock bus signal CLB intended for the first slave 5₁ is sent via the data bus 8. Accordingly, the signals are accompanied by an addressing signal AS, which after processing, corresponds to a processed addressing signal ASP with a value falling in the range [LT1, HT1]. Thus, a trigger signal TS1 is sent to the switches 12, 13 of the first slave 5₁ and the data signal DAB and clock signal CLB is transferred as data signal DA1 and clock signal CL1 to the first slave 5₁.

At a second time t2, the package has been transferred to the first slave 5₁ and the addressing signal AS or processed addressing signal ASP rises above the high threshold level HT1 for the first slave 5₁. When the processed addressing signal ASP is between the two ranges, the I2C bus system 1 is in the idle state.

At a third time t3, a data bus signal DAB and clock bus signal CLB intended for the second slave 5₂ is sent via the data bus line 8. The signals are accompanied by an addressing signal AS attributed to the second slave 5₂. Accordingly, the addressing signal AS or processed addressing signal is within the range [LT2, HT2]. The switches of the second slave 5₂ are enabled by the trigger signal TS2 and the data signal DAB and clock signal CLB is transferred as data signal DA2 and clock signal CL2 to the second slave 5₂.

At a fourth time t4, the package has been transferred to the second slave 5₂ and the addressing signal AS or processed addressing signal ASP rises above the high threshold level HT2 for the second slave 5₂. The bus system 1 is again in the idle state.

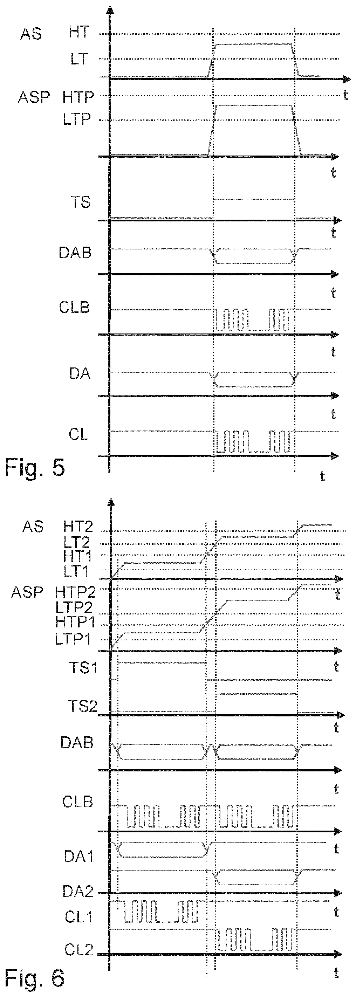

Figure 5 shows communication waveforms over time t in an I2C system 1 for one slave 5ₙ on an I2C bus 7. This embodiment differs from the embodiment of Figure 3 in that the addressing signal AS is in the form of a current signal. The addressing signal AS is converted by the signal conditioning circuit 14 to a processed addressing signal ASP in the form of a voltage signal.

When the processed addressing signal ASP is in a range [LTP, HTP] attributed to a slave 5ₙ, the switches 12, 13 are enabled and the data package is transferred to the slave 5ₙ. The range for the processed addressing signal ASP corresponds to a range [LT, HT] for the addressing signal AS.

Figure 6 shows communication waveforms over time t in an I2C system 1 for a first slave 5₁ and a second slave 5₂ on an I2C bus 7. Also here, this embodiment differs from the embodiment of Figure 4 in that the addressing signal AS is in the form of a current signal.

Like in Figure 5, a range [LT1, HT1] for the addressing signal AS in form of a current attributed to the first slave 5₁ corresponds to a range [LTP1, HTP1] of the processed addressing signal ASP in form of a voltage. A range [LT2, HT2] for the addressing signal AS in form of a current attributed to the second slave 5₂ corresponds to a range [LTP2, HTP2] of the processed addressing signal ASP in form of a voltage.

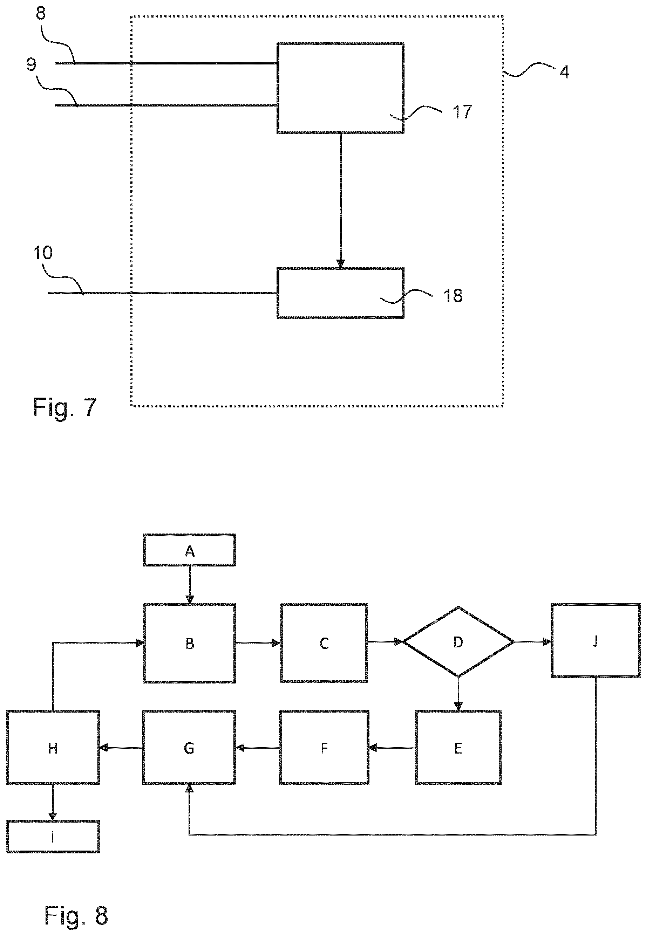

Figure 7 shows an embodiment of a master 4 in a schematic circuit diagram. The main part of the master 4 is a controller 17. The controller 17 may include a microcontroller, microprocessor, DSP, FPGA, CPLD, ASIC or SoC, for example.

The controller 17 provides the data bus signal DAB and the clock bus signal CLB to the data bus 8 and clock bus 9. Furthermore, the controller 17 sets the signal level for the addressing signal AS and drives a D/A converter 18 which sends the respective addressing signal AS to the addressing signal line 10. The D/A converter 18 may provide either voltage or current. The D/A converter may include a discrete circuit and/or an integrated circuit. The D/A converter may be a part of the microcontroller, DSP, ASIC or SoC, for example.

Figure 8 shows an embodiment of a control algorithm of a master 4. The algorithm for transmitting data via the I2C bus 7 to a specific slave 5ₙ starts in step A.

The master 4, in particular the controller 17 checks in step B an internal look-up table in which for each slave 5ₙ the attributed level of the addressing signal AS is stored. The proper level of the addressing signal is set in step C, in particular by the D/A converter 18. In step D, it is checked if the particular slave 5ₙ is present on the I2C bus 7 by sending a small data package together with the addressing signal AS to the slave 5ₙ.

When the check has been successful, the controller goes to the step E, where the communication with the slave 5ₙ is started. When the check has not been successful, the controller 17 goes to the step J. In step F, data is read from or written on the slave memory 11.

In step G, the communication with the slave memory 11 is stopped. In step H, the next slave 5ₙ is to be addressed and the algorithm steps are repeated.

Alternatively, the communication on the I2C bus 7 is stopped. In this case, in step I, the level of the addressing signal AS is set to 0 V or 0 A and the I2C bus system 1 is set in the idle state.

In step J, an error flag is set and then the controller 17 goes to the step G.

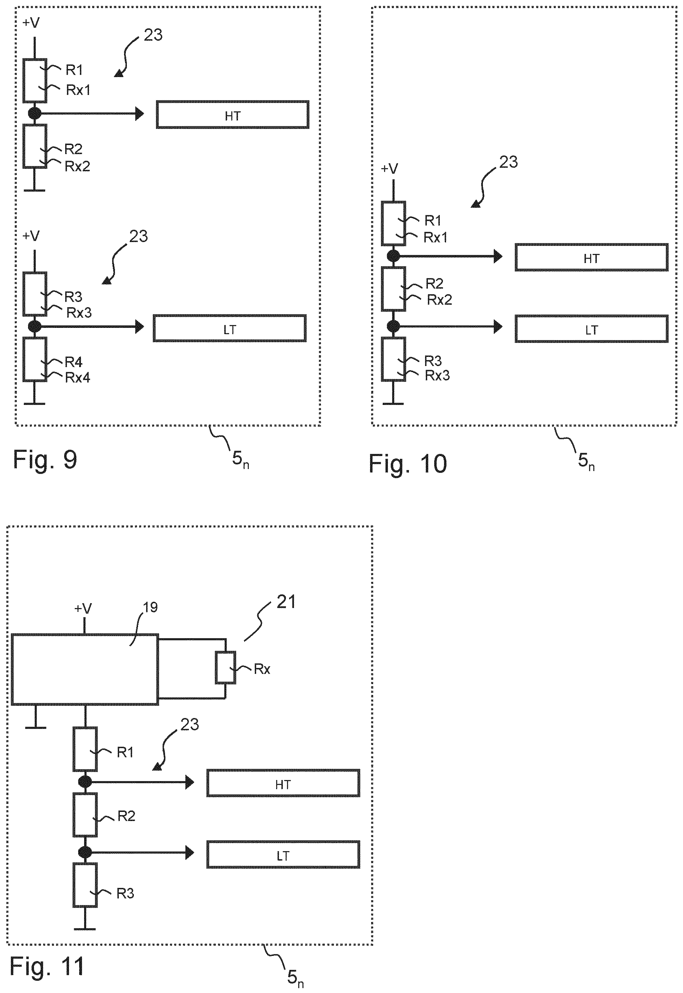

Figures 9 to 11 show embodiments of setting a high threshold level HT and a low threshold level LT for a slave 5ₙ. In these embodiments, the threshold levels HT and LT are set on the slave 5ₙ.

Figure 9 shows setting a high threshold value HT by using a voltage divider 23 by providing two resistors R1 and R2. The high threshold value HT is the voltage that drops across one of the resistors R1, R2. In the same way, the high threshold value is set as the voltage that drops across one of the further resistors R3, R4.

The resistors R1, R2, R3, R4 can be provided on the slave 5ₙ. The resistors R1, R2, R3, R4 can be connected between ground (0V) and a voltage source +V.

In this case, the resistors R1, R2, R3, R4 directly provide a coding for the respective slave 5ₙ. As an example, the resistance value of at least one of the resistors R1, R2, R3, R4 is different for different slaves 5ₙ. It is also possible that the number and/or electric connections of the resistors R1, R2, R3, R4 is different. Accordingly, the resistors R1, R2, R3, R4 have a double function of coding resistors Rx1, Rx2, Rx3, Rx4 and resistors of the voltage divider 23.

In Figure 10, the high threshold level HT and the low threshold level LT are set by a voltage divider 23 by providing three resistors R1, R2, R3 connected in series.

Also here, the resistors R1, R2, R3 directly provide a coding for the respective slave 5ₙ. In this example, the resistors R1, R2, R3 have a double function as coding resistors Rx1, Rx2, Rx3 and resistors of the voltage divider 23.

In Figure 11, a programmable current source 19 is provided on the slave 5ₙ. The programmable current source 19 is connected in parallel to a coding resistor Rx.

In this case, the coding is provided by the coding resistor Rx which is not part of the voltage divider 23. Accordingly, the resistance values of the coding resistors Rx are different for different slaves 5ₙ.

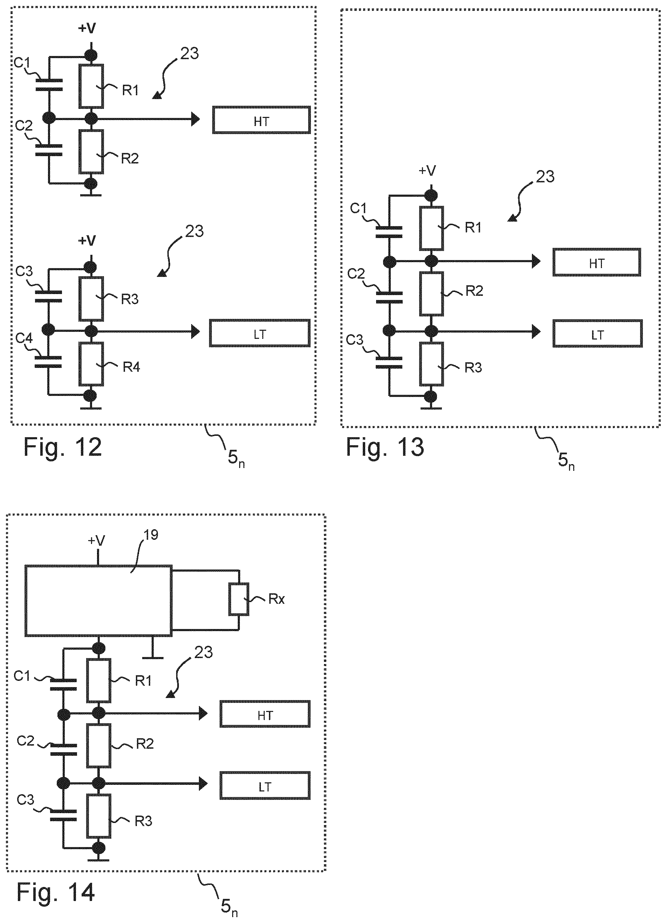

Figures 12 to 14 show further embodiments of setting high and low threshold values HT, LT for a slave 5ₙ. The difference to the embodiments shown in Figures 9 to 11 is that capacitances C1, C2, C3, C4 are connected in parallel to the resistors R1, R2, R3. The capacitances C1, C2, C3, C4 are added for noise reduction.

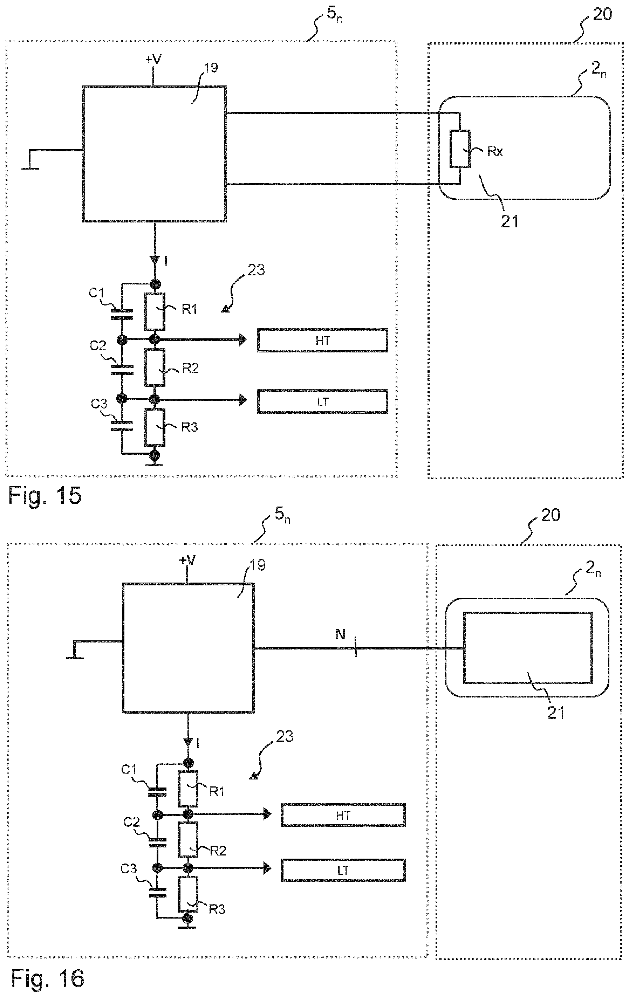

Figure 15 shows an embodiment of setting high and low threshold values for a slave 5ₙ externally. Accordingly, the threshold values are not set on the slave 5ₙ as in Figure 14 but on an external component such as the backplane 20.

The threshold value may be set for each slot 2ₙ. The threshold value is set by a coding resistor Rx, wherein the resistance value can be set to a different value for each slot 2ₙ.

Also here, the capacitors C1, C2, C3 are present for noise reduction. It is also possible that the capacitors C1, C2, C3 are not provided.

Figure 16 shows a further embodiment of setting high and low threshold values HT, LT for a slave 5ₙ externally. In this case, the resistance value is set by a coding circuit 21 for each slot 2ₙ. The coding circuit 21 is connected to the slave by a number N of coding signal lines. Each slot 2ₙ has a different coding so that each slot 2ₙ is identifiable.

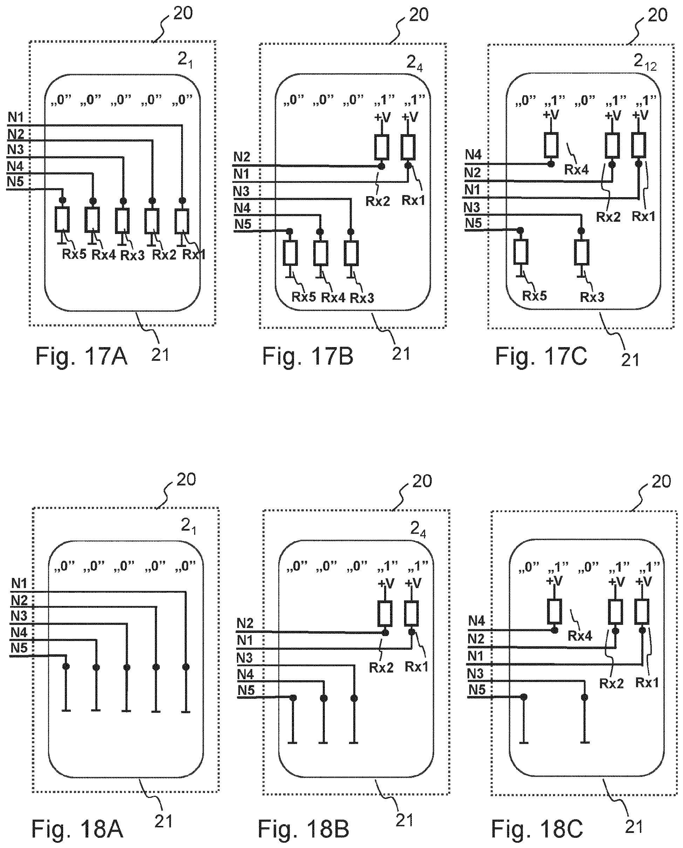

Figures 17A to 17c shows an embodiment of coding circuits 21, which may be used in the embodiments of Figure 16, for example. In the figures, only the first slot 2₁, the fourth slot 2₄ and the twelfth slot 2₁₂ are shown. However, the coding circuits 21 are also present for the other slots.

Each coding resistor Rx1-Rx5 can be connected or not connected to a specified voltage level +V on one side and to the associated slot 2ₙ on the other side. When a coding resistor Rx1-Rx5 is not connected to the specified voltage level +V it can be connected to ground (0V) or may be floating, for example. The specified voltage level +V is a level other than ground (0V) and can be positive. The specified voltage level +V may be a common voltage level for all resistors Rx1-Rx5 and all slots.

For the first slot 2₁, none of the coding resistors Rx1-Rx5 is connected to the specified voltage level such that the binary coding corresponds to "0" "0" "0" "0" "0". For the fourth slot 2₄, coding resistors Rx1, Rx2 are connected to the specified voltage level while coding resistors Rx3, Rx4, Rx5 are connected to ground. The binary coding corresponds to "0" "0" "0" "1" "1". For the twelfth slot 2₁₂, coding resistors Rx1, Rx2, Rx4 are connected to the specified voltage level V, while coding resistors Rx3, Rx5 are connected to ground (0V) such that the binary coding corresponds to "0" "1" "0" "1" "1".

Accordingly, in this case, each slot 2ₙ has the same layout of the coding circuit 21 but a different coding by a pattern of connecting and not connecting the coding resistors Rx1-Rx5 to the specified voltage +V.

Figures 18A to 18C shows a further embodiment of coding circuits 21 for the slots 2₁, 2₄, 2₁₂ of an I2C system 1. The difference to the embodiment of Figures 17A to 17C is that coding resistors Rx1-Rx5 are only provided when being connected to the specified voltage +V, corresponding to the binary coding of "1". The coding signal lines N1-N5 which are not connected to a coding resistor Rx1-Rx5 are connected directly to ground (0V).

Accordingly, in this case, each slot 2₁, 2₄, 2₁₂ has a different layout of the coding circuit 21. By providing coding resistors Rx1-Rx5 only for a binary coding of "1", costs can be reduced.

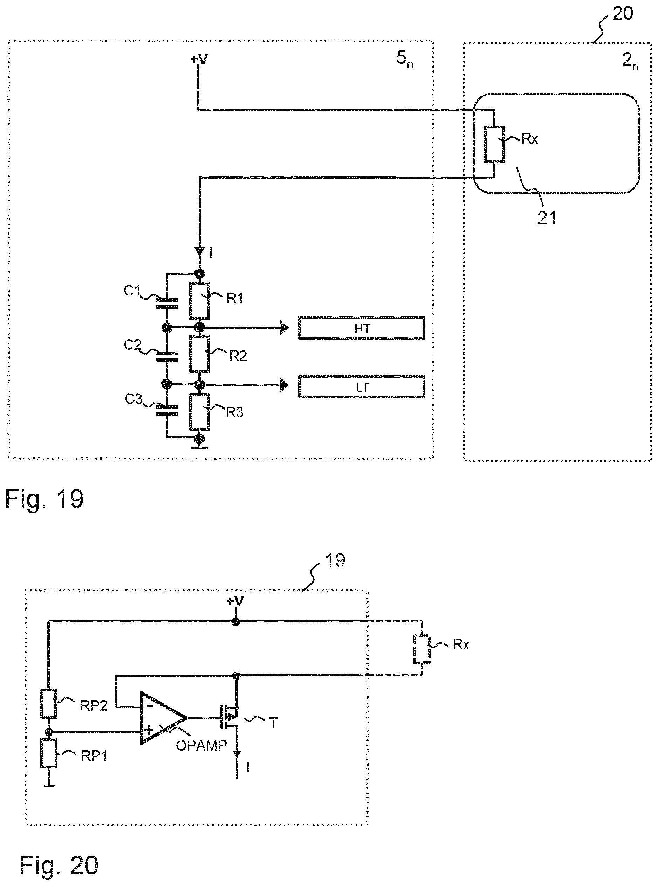

Figure 19 shows a further embodiment of setting high and low threshold values for a slot 2ₙ and associated slave 5ₙ externally. As in Figure 15, a coding resistor Rx is located on the backplane for each slot 2ₙ. However, here, a voltage source is used and the programmable current source is not present.

Also here, the capacitors C1, C2, C3 are present for noise reduction. It is also possible that the capacitors C1, C2, C3 are not provided.

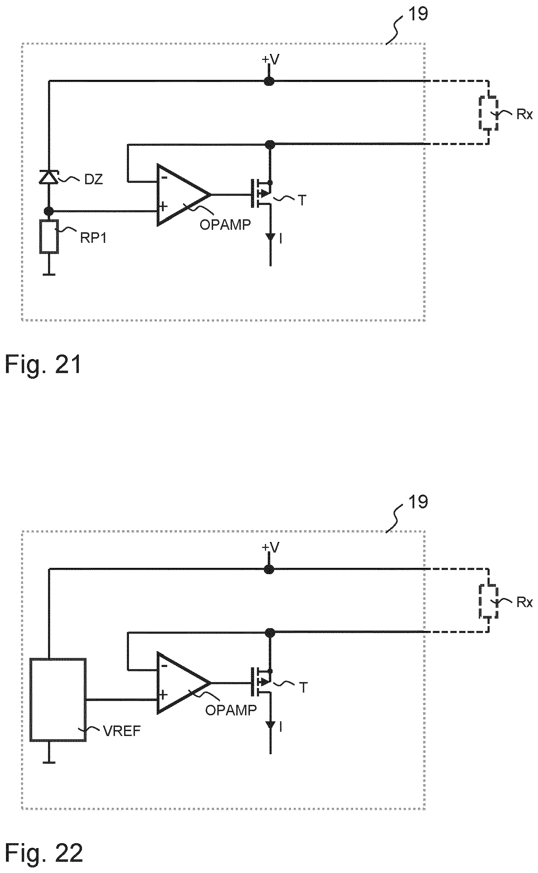

Figures 20 and 21 show embodiments of a programmable current source 19. The programmable current source 19 may be used in the embodiments shown in Figures 11, 14 or 15, for example.

In the embodiment of Fig. 20, the programmable current source 19 comprises two resistors RP1, RP2, an operational amplifier OPAMP and a transistor T (MOSFET, for example). In the embodiment of Fig. 21, the programmable current source 19 comprises a Zener diode DZ instead of the second resistor RP2. In the embodiment of Fig. 22, the programmable current source 19 comprises a voltage reference VREF instead of resistors RP1 and RP2.

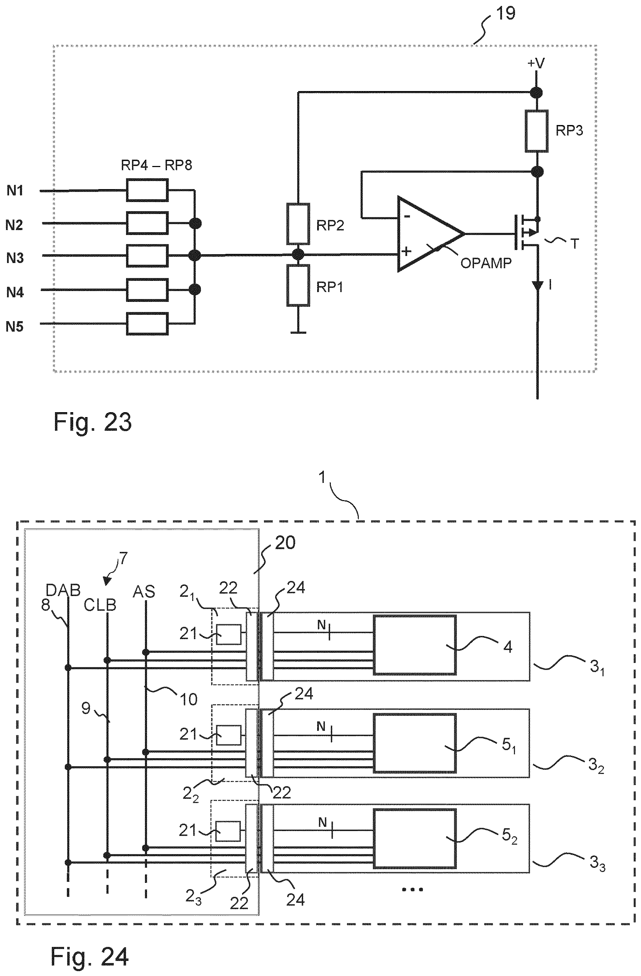

Figure 23 shows a further embodiment of a programmable current source 19. The programmable current source 19 may be used in the embodiment comprising a coding circuit as shown in Fig. 16, Figs. 17A-17C and Figs. 18A-18C.

The programmable current source comprises a third resistor RP3 instead of the connection to the outside coding resistor Rx of Fig. 20 and 21. The coding signal lines N1-N5 are connected via further resistors RP4-RP8 to the coding circuit 21.

Figure 24 shows a further embodiment of an I2C bus system 1 in a schematic circuit diagram. The coding circuit 21 is located on the backplane 20.

### Reference Signs

- 1: I2C bus system
- 2₁: first slot
- 2₂: second slot
- 2₄: fourth slot
- 2₁₂: twelfth slot
- 2ₙ: n-th slot
- 3₁: first board
- 3₂: second board
- 3₃: third
- 3ₙ: n-th board
- 4: master
- 5₁: first slave
- 5₂: second slave
- 5₄: fourth slave
- 5₁₂: twelfth slave
- 5ₙ: n-th slave
- 7: I2C bus
- 8: data bus
- 9: clock bus
- 10: addressing signal line
- 11: slave device
- 12: first switch
- 13: second switch
- 14: signal conditioning circuit
- 15: comparator
- 16: trigger signal line
- 17: controller
- 18: D/A converter
- 19: programmable current source
- 20: backplane
- 21: coding circuit
- 22: backplane connector
- 23: voltage divider
- 24: board connector

- +V: voltage source
- I: current
- V: voltage
- VREF: voltage reference
- AS: (VA/IA) analog addressing signal
- ASP: (VI) processed addressing signal
- CLB: clock bus signal
- DAB: data bus signal
- OPAMP: operational amplifier
- T: transistor
- TS: trigger signal
- TS1: trigger signal on first slave
- TS2: trigger signal on second slave
- DA: data signal on slave
- DA1: data signal on first slave
- DA2: data signal on second slave
- CL: clock signal on slave
- CL1: clock signal on first slave
- CL2: clock signal on second slave

- HT: high threshold level
- HT1: high threshold level for first slave
- HT2: high threshold level for second slave
- LT: low threshold level
- LT1: low threshold level for first slave
- LT2: low threshold level for second slave

- HTP: high threshold level for processed signal
- HTP1: high threshold level for processed signal for first slave
- HTP2: high threshold level for processed signal for second slave
- LTP: low threshold level for processed signal
- LTP1: low threshold level for processed signal for first slave
- LTP2: low threshold level for processed signal for second slave

- R1, R2, R3, R4: resistors in voltage divider
- Rx, Rx1-Rx5: coding resistors
- RP1-RP8: resistors in programmable current source

## Claims

1. An I2C bus system (1), comprising a master (4) and a plurality of slaves (5ₙ),
wherein each of the slaves (5ₙ) comprises a slave device (11);
the I2C bus system further comprising a common I2C bus (7) comprising a data bus (8) and a clock bus (9) and
comprising an addressing signal line (10) for connecting the master (4) and the plurality of slaves (5ₙ),
wherein the addressing signal line (10) is configured to transmit an analog addressing signal (AS) from the master (4) to the slaves (5ₙ),
wherein to each of the slaves (5ₙ) a range of the analog addressing signal (AS) and/or a processed analog addressing signal (ASP) is attributed, the range being defined by a high threshold level (HT) and a low threshold level (LT),
wherein the I2C bus system (1) is configured to selectively connect each of the slave devices (11)) to the data bus (8) and clock bus (9) only if the addressing signal is in the range.

2. The I2C bus system (1) of claim 1,
wherein each of the slaves (5ₙ) comprises at least one switch (12, 13) in the connection of the slave device (11) with the common I2C bus (7).

3. The I2C bus system (1) of claim 2,
wherein the switch (5, 6) is enabled when the analog addressing signal is in the range attributed to the slave (5ₙ) and disabled when the analog addressing signal (AS) is not within the range attributed to the slave (5ₙ).

4. The I2C bus system (1) of any of claims 2 or 3,
wherein each of the slaves (5ₙ) comprises a first switch (11) in the connection with the data bus (8) and a second switch (13) in the connection with the clock bus (9).

5. The I2C bus system (1) of any of the preceding claims, wherein the master (4) is configured to set a level of the addressing signal (AS).

6. The I2C bus system (1) of any of the preceding claims, wherein the analog addressing signal (AS) is a voltage or current signal.

7. The I2C bus system (1) of any of the preceding claims, wherein each of the slaves (5ₙ) comprises a comparator (15) for determining if the addressing signal (AS) is in the range.

8. The I2C bus system (1) of any of the preceding claims, wherein the range is coded on each of the slaves (5ₙ) or on a backplane (20) of the I2C bus system (1).

9. The I2C bus system (1) of any of the preceding claims, wherein at least one coding resistor (Rx, Rx1-Rx5) determining the range is located on at least one of the slaves (5ₙ) or on a backplane (20) of the I2C bus system (1).

10. The I2C bus system (1) of any of the preceding claims, comprising at least one voltage divider (23) for setting the low threshold level (LT) and the high threshold level (HT).

11. The I2C bus system (1) of claim 10,
wherein the coding of the slaves (5ₙ) is accomplished by at one or more coding resistors (Rx, Rx1-Rx5) which are not part of the voltage divider (23).

12. The I2C bus system (1) of any of the preceding claims,
wherein the range is coded by a coding circuit (21)
comprising one or more coding resistors (Rx, Rx1-Rx5),
wherein the coding is accomplished by a pattern of the coding resistors (Rx, Rx1-Rx5) connected or not connected to a specific voltage level (+V) from one side and connected to the slave (5ₙ) from the other side.

13. The I2C bus system (1) of claim 12,
wherein for each slave (5ₙ) coding resistors (Rx, Rx1-Rx5) of the same number and values are provided in the coding circuit (21) and the coding is accomplished by the connection of the coding resistors (Rx, Rx1-Rx5) to a specific voltage level (+V) on one side or wherein for each slave (5ₙ) the coding circuit (21) only comprises the coding resistors (Rx, Rx1-Rx5) which are connected to a specific voltage level (+V) on one side.

14. The I2C bus system (1) of claim 10,
wherein the range is coded on each of the slaves (5ₙ),
wherein the coding of the slaves (5ₙ) is accomplished by the resistors (R1, R2, R3, R4) of the voltage divider (23).

15. A method for selectively connecting in an I2C bus system (1) a plurality of slave devices (11) to a master (4),
comprising the steps of providing an I2C bus system (1) comprising a master (4), a plurality of slaves (5ₙ), a common I2C bus (7) comprising a data bus (8) and a clock bus (9) and comprising an addressing signal line (10),
wherein each of the slaves (5ₙ) comprises a slave device (11),
attributing to each of the slaves (5ₙ) a range of an analog addressing signal (AS), the range being defined by a high threshold level (HT) and a low threshold level (LT),
sending a data bus signal (DAB) on the data bus (8) and a clock bus signal (CLB) on the clock bus (9) accompanied by an addressing signal (AS) on the addressing signal line (10) and selectively connecting each of the slave devices (11)) to the data bus (8) and the clock bus (9) only if the addressing signal (AS) is in the range.

## Patentansprüche

1. I2C-Bussystem (1),
das einen Master (4) und mehrere Slaves (5ₙ) aufweist,
wobei jeder der Slaves (5ₙ) eine Slave-Vorrichtung (11) aufweist;
wobei das I2C-Bussystem weiter
einen gemeinsamen I2C-Bus (7) aufweist, der einen Datenbus (8) und einen Taktbus (9) aufweist, und
eine Adressierungssignalleitung (10) zum Verbinden des Masters (4) und der mehreren Slaves (5ₙ) aufweist, wobei die Adressierungssignalleitung (10) dazu ausgelegt ist, ein analoges Adressierungssignal (AS) von dem Master (4) zu den Slaves (5ₙ) zu übertragen,
wobei jedem der Slaves (5ₙ) ein Bereich des analogen Adressierungssignals (AS) und/oder eines verarbeiteten analogen Adressierungssignals (ASP) zugewiesen wird, wobei der Bereich durch einen hohen Schwellenpegel (HT) und einen niedrigen Schwellenpegel (LT) definiert ist,
wobei das I2C-Bussystem (1) dazu ausgelegt ist, jede der Slave-Vorrichtungen (11) nur dann selektiv mit dem Datenbus (8) und dem Taktbus (9) zu verbinden, wenn das Adressierungssignal in dem Bereich liegt.

2. I2C-Bussystem (1) nach Anspruch 1,
wobei jeder der Slaves (5ₙ) in der Verbindung der Slave-Vorrichtung (11) mit dem gemeinsamen I2C-Bus (7) mindestens einen Schalter (12, 13) aufweist.

3. I2C-Bussystem (1) nach Anspruch 2,
wobei der Schalter (5, 6) aktiviert wird, wenn das analoge Adressierungssignal in dem Bereich liegt, der dem Slave (5ₙ) zugewiesen ist, und deaktiviert wird, wenn das analoge Adressierungssignal (AS) nicht in dem Bereich liegt, der dem Slave (5ₙ) zugewiesen ist.

4. I2C-Bussystem (1) nach einem der Ansprüche 2 oder 3, wobei jeder der Slaves (5ₙ) in der Verbindung mit dem Datenbus (8) einen ersten Schalter (11) und in der Verbindung mit dem Taktbus (9) einen zweiten Schalter (13) aufweist.

5. I2C-Bussystem (1) nach einem der vorhergehenden Ansprüche,
wobei der Master (4) dazu ausgelegt ist, einen Pegel des Adressierungssignals (AS) einzustellen.

6. I2C-Bussystem (1) nach einem der vorhergehenden Ansprüche,
wobei das analoge Adressierungssignal (AS) ein Spannungs- oder Stromsignal ist.

7. I2C-Bussystem (1) nach einem der vorhergehenden Ansprüche,
wobei jeder der Slaves (5ₙ) einen Komparator (15) zum Bestimmen, ob das Adressierungssignal (AS) in dem Bereich liegt, aufweist.

8. I2C-Bussystem (1) nach einem der vorhergehenden Ansprüche,
wobei der Bereich auf jedem der Slaves (5ₙ) oder auf einer Rückwandplatine (20) des I2C-Bussystems (1) codiert ist.

9. I2C-Bussystem (1) nach einem der vorhergehenden Ansprüche,
wobei sich mindestens ein Codierungswiderstand (Rx, Rx1-Rx5), der den Bereich bestimmt, auf mindestens einem der Slaves (5ₙ) oder auf einer Rückwandplatine (20) des I2C-Bussystems (1) befindet.

10. I2C-Bussystem (1) nach einem der vorhergehenden Ansprüche,
das mindestens einen Spannungsteiler (23) zum Einstellen des niedrigen Schwellenpegels (LT) und des hohen Schwellenpegels (HT) aufweist.

11. I2C-Bussystem (1) nach Anspruch 10,
wobei das Codieren der Slaves (5ₙ) durch einen oder mehrere Codierungswiderstände (Rx, Rx1-Rx5), die nicht Teil des Spannungsteilers (23) sind, erreicht wird.

12. I2C-Bussystem (1) nach einem der vorhergehenden Ansprüche,
wobei der Bereich durch eine Codierungsschaltung (21) codiert wird,
die einen oder mehrere Codierungswiderstände (Rx, Rx1-Rx5) aufweist,
wobei das Codieren durch ein Muster der Codierungswiderstände (Rx, Rx1-Rx5) erreicht wird, die von einer Seite mit einem spezifischen Spannungspegel (+V) verbunden oder nicht verbunden sind und von der anderen Seite mit dem Slave (5ₙ) verbunden sind.

13. I2C-Bussystem (1) nach Anspruch 12,
wobei für jeden Slave (5ₙ) Codierungswiderstände (Rx, Rx1-Rx5) der gleichen Anzahl und Werte in der Codierungsschaltung (21) bereitgestellt sind und die Codierung durch das Verbinden der Codierungswiderstände (Rx, Rx1-Rx5) mit einem spezifischen Spannungspegel (+V) auf einer Seite erreicht wird oder wobei für jeden Slave (5ₙ) die Codierungsschaltung (21) nur die Codierungswiderstände (Rx, Rx1-Rx5), die auf einer Seite mit einem spezifischen Spannungspegel (+V) verbunden sind, aufweist.

14. I2C-Bussystem (1) nach Anspruch 10,
wobei der Bereich auf jedem der Slaves (5ₙ) codiert ist, wobei die Codierung der Slaves (5ₙ) durch die Widerstände (R1, R2, R3, R4) des Spannungsteilers (23) erreicht wird.

15. Verfahren zum selektiven Verbinden mehrerer Slave-Vorrichtungen (11) in einem I2C-Bussystem (1) mit einem Master (4),
wobei das Verfahren die folgenden Schritte aufweist:
Bereitstellen eines I2C-Bussystems (1), das aufweist: einen Master (4), mehrere Slaves (5ₙ), einen gemeinsamen I2C-Bus (7) mit einem Datenbus (8) und einem Taktbus (9) und eine Adressierungssignalleitung (10),
wobei jeder der Slaves (5ₙ) eine Slave-Vorrichtung (11) aufweist,
Zuweisen eines Bereichs eines analogen Adressierungssignals (AS) zu jedem der Slaves (5ₙ), wobei der Bereich durch einen hohen Schwellenpegel (HT) und einen niedrigen Schwellenpegel (LT) definiert ist,
Senden eines Datenbussignals (DAB) auf dem Datenbus (8) und eines Taktbussignals (CLB) auf dem Taktbus (9), begleitet von einem Adressierungssignal (AS) auf der Adressierungssignalleitung (10), und selektives Verbinden jeder der Slave-Vorrichtungen (11) mit dem Datenbus (8) und
dem Taktbus (9) nur dann, wenn das Adressierungssignal (AS) in dem Bereich liegt.

## Revendications

1. Système de bus I2C (1),
comprenant un maître (4) et une pluralité d'esclaves (5ₙ), dans lequel chacun des esclaves (5ₙ) comprend un dispositif esclave (11) ;
le système de bus I2C en outre
comprenant un bus commun I2C (7) comprenant un bus de données (8) et un bus d'horloge (9) et
comprenant une ligne de signal d'adressage (10) pour connecter le maître (4) et la pluralité d'esclaves (5ₙ), dans lequel la ligne de signal d'adressage (10) est configurée pour transmettre un signal d'adressage (AS) analogique du maître (4) aux esclaves (5ₙ),
dans lequel est attribuée à chacun des esclaves (5ₙ) une plage du signal d'adressage (AS) analogique et/ou un signal d'adressage analogique traité (ASP), la plage étant définie par un niveau de seuil haut (HT) et un niveau de seuil bas (LT),
dans lequel le système de bus I2C (1) est configuré pour connecter sélectivement chacun des dispositifs esclaves (11) au bus de données (8) et au bus d'horloge (9) uniquement si le signal d'adressage est dans la plage.

2. Système de bus I2C (1) selon la revendication 1,
dans lequel chacun des esclaves (5ₙ) comprend au moins un commutateur (12, 13) sur la connexion du dispositif esclave (11) avec le bus commun I2C (7).

3. Système de bus I2C (1) selon la revendication 2,
dans lequel le commutateur (5, 6) est activé lorsque le signal d'adressage analogique est dans la plage attribuée à l'esclave (5ₙ) et désactivé lorsque le signal d'adressage (AS) analogique n'est pas dans la plage attribuée à l'esclave (5ₙ).

4. Système de bus I2C (1) selon l'une quelconque des revendications 2 ou 3,
dans lequel chacun des esclaves (5ₙ) comprend un premier commutateur (11) dans la connexion avec le bus de données (8) et un deuxième commutateur (13) dans la connexion avec le bus d'horloge (9).

5. Système de bus I2C (1) selon l'une quelconque des revendications précédentes,
dans lequel le maître (4) est configuré pour définir un niveau du signal d'adressage (AS).

6. Système de bus I2C (1) selon l'une quelconque des revendications précédentes,
dans lequel le signal d'adressage (AS) est un signal de tension ou de courant.

7. Système de bus I2C (1) selon l'une quelconque des revendications précédentes,
dans lequel chacun des esclaves (5ₙ) comprend un comparateur (15) pour déterminer si le signal d'adressage (AS) est dans la plage.

8. Système de bus I2C (1) selon l'une quelconque des revendications précédentes,
dans lequel la plage est codée sur chacun des esclaves (5ₙ) ou sur un fond de panier (20) du système de bus I2C (1).

9. Système de bus I2C (1) selon l'une quelconque des revendications précédentes,
dans lequel au moins une résistance de codage (Rx, Rx1-Rx5) déterminant la plage est située sur au moins un des esclaves (5ₙ) ou sur un fond de panier (20) du système de bus I2C (1).

10. Système de bus I2C (1) selon l'une quelconque des revendications précédentes,
comprenant au moins un diviseur de tension (23) pour définir le niveau de seuil bas (LT) et le niveau de seuil haut (HT).

11. Système de bus I2C (1) selon la revendication 10,
dans lequel le codage des esclaves (5ₙ) est réalisé par une ou plusieurs résistances de codage (Rx, Rx1-Rx5) qui ne font pas partie du diviseur de tension (23).

12. Système de bus I2C (1) selon l'une quelconque des revendications précédentes,
dans lequel la plage est codée par un circuit de codage (21) comprenant une ou plusieurs résistances de codage (Rx, Rx1-Rx5),
dans lequel le codage est réalisé par un motif des résistances de codage (Rx, Rx1-Rx5) connectées ou non connectées à un niveau de tension spécifique (+V) d'un côté et connectées à l'esclave (5ₙ) de l'autre côté.

13. Système de bus I2C (1) selon la revendication 12,
dans lequel pour chaque esclave (5ₙ), des résistances de codage (Rx, Rx1-Rx5) de mêmes nombre et valeurs sont prévues dans le circuit de codage (21) et le codage est réalisé par la connexion des résistances de codage (Rx, Rx1-Rx5) à un niveau de tension spécifique (+V) sur un côté ou dans lequel pour chaque esclave (5ₙ) le circuit de codage (21) ne comprend que les résistances de codage (Rx, Rx1-Rx5) qui sont connectées à un niveau de tension spécifique (+V) sur un côté.

14. Système de bus I2C (1) selon la revendication 10,
dans lequel la plage est codée sur chacun des esclaves (5ₙ), dans lequel le codage des esclaves (5ₙ) est réalisé par les résistances (R1, R2, R3, R4) du diviseur de tension (23).

15. Procédé de connexion sélective dans un système de bus I2C (1) d'une pluralité de dispositifs esclaves (11) à un maître (4),
comprenant les étapes de fourniture d'un système de bus I2C (1) comprenant un maître (4), une pluralité d'esclaves (5ₙ), un bus commun I2C (7) comprenant un bus de données (8) et un bus d'horloge (9) et comprenant une ligne de signal d'adressage (10),
dans lequel chacun des esclaves (5ₙ) comprend un dispositif esclave (11),
attribution à chacun des esclaves (5ₙ) d'une plage d'un signal d'adressage (AS) analogique, la portée étant définie par un niveau de seuil haut (HT) et un niveau de seuil bas (LT), envoi d'un signal (DAB) de bus de données sur le bus de données (8) et d'un signal (CLB) de bus d'horloge sur le bus d'horloge (9) accompagné d'un signal d'adressage (AS) sur la ligne de signal d'adressage (10) et connexion sélective de chacun des dispositifs esclaves (11) au bus de données (8) et au bus d'horloge (9) uniquement si le signal d'adressage (AS) est dans la plage.
